# NOUVEAU FASCICULE DE BREVET EUROPEEN

(11) **EP 0 990 295 B2**
(45) Date de publication et mention de la décision concernant l'opposition: **29.06.2011**
(45) Mention de la délivrance du brevet: 25.08.2004
(21) Numéro de dépôt: 98932245.8
(22) Date de dépôt: 19.06.1998
(51) Int. Cl.: H02K 3/28, H02K 3/12, H02K 15/085

(54) **PROCEDE DE BOBINAGE ET BOBINES POUR MACHINE ELECTRIQUE TOURNANTES**
VERFAHREN ZUM BEWICKELN UND WICKLUNGEN FÜR ELEKTRISCHE MASCHINEN
COILING METHOD AND COILS FOR ROTATING ELECTRIC MACHINE

(30) Priorité: 20.06.1997 FR 9707731
(43) Date de publication de la demande: 05.04.2000
(73) Titulaire: JSPM, 59460 Jeumont (FR)
(72) Inventeur: MILET, Yves, F-59600 Assevent (FR); DELTOUR, Robert, F-59460 Jeumont (FR)
(74) Mandataire: Lebkiri, Alexandre
(86) Numéro de dépôt international: PCT/FR1998/001297
(87) Numéro de publication internationale: WO 1998/059402

(56) Documents cités:
- EP-A1- 0 727 867
- EP-A1- 0 878 893
- WO-A-93/03534
- DE-A1- 1 613 561
- DE-A1- 4 302 807
- DE-A1- 4 403 302
- DE-A1- 4 411 749
- DE-C- 558 486
- DE-C- 4 209 532
- DE-U1- 9 212 889
- GB-A- 2 082 482
- US-A- 2 683 232
- US-A- 3 719 844
- US-A- 5 376 852
- US-A- 5 422 526
- PATENT ABSTRACTS OF JAPAN vol. 005, no. 059 (E-053), 22 avril 1981 & JP 56 010053 A (MATSUSHITA ELECTRIC IND CO LTD), 2 février 1981

## Description

L'invention est relative au domaine des machines électriques tournantes, lesquelles comportent au moins deux armatures coaxiales, séparées par un entrefer : un stator fixe et un rotor animé d'un mouvement uniforme.

On s'intéresse ici essentiellement aux machines à courant alternatif, multiphasées et multipôles.

Ces armatures peuvent être cylindriques et la machine crée alors un champ radial. Les conducteurs sont placés dans des encoches réparties sur la périphérie interne du stator ou la périphérie externe du rotor. Les conducteurs sont parallèles à l'axe de rotation de la machine.

Ces armatures peuvent également prendre la forme de disques et dans ce cas, la machine crée un champ axial. Les conducteurs sont placés dans des encoches radiales, ils sont donc perpendiculaires à l'axe de rotation de la machine.

De manière classique, les conducteurs sont disposés dans les encoches d'un circuit magnétique, selon différents types de bobinages, choisis en fonction des applications.

Les bobinages sont réalisés à partir de bobines ou de barres, mais on s'intéresse ici essentiellement aux bobinages réalisés avec des bobines.

Les bobines sont réalisées à partir de conducteurs isolés entre eux et qui sont enroulés selon des spires concentriques. Chaque bobine est placée dans deux encoches différentes du circuit magnétique. On appelle généralement faisceaux, les deux parties de la bobine situées dans les encoches et développante ou tête de bobine, la partie de la bobine qui est à l'extérieur du circuit magnétique.

Les bobinages classiques sont à bobines concentriques et à bobines enchevêtrées, notamment les bobinages du type imbriqué qui sont utilisés pour les machines de moyenne et forte puissances.

Les bobinages à bobines concentriques peuvent être réalisés par enroulement à pôles alternés ou à pôles conséquents.

Les conducteurs sont placés dans un seul plan d'encoche qui est composé de deux couches réalisées successivement, pour un bobinage à pôles conséquents et d'autant de couches que de phases, pour un bobinage à pôles alternés.

Ces bobinages ont l'avantage d'être réalisés par plan, ils sont donc facilement automatisables.

Ils présentent cependant des limites et des inconvénients.

Les bobinages en un plan sont aujourd'hui essentiellement destinés à des machines de faible puissance pour lesquelles les coûts de fabrication sont prépondérants devant les performances techniques. Dans ce cas, les conducteurs sont en fils ronds avec un remplissage d'encoche inférieur à ce que l'on peut obtenir avec des conducteurs méplats et le pas de bobinage est entier, au détriment de l'allure du champ tournant.

Toutefois, il est possible de réaliser ce type de bobinage à partir de conducteurs méplats, avec des bobines de géométrie différente, ce qui peut entraîner des déséquilibres entre phases et une dispersion magnétique, du fait des différences d'encombrement des développantes.

Pour améliorer la progressivité du champ magnétique tournant, la réalisation de bobinages à pas raccourci est faisable mais ses possibilités sont limitées et elle entraîne des dissymétries de bobinage.

Les bobinages à bobines enchevêtrées du type imbriqué autorisent les pas raccourcis et de ce fait, ils permettent l'élimination de certains harmoniques électriques.

Dans les bobinages imbriqués, les conducteurs sont disposés dans les encoches selon deux plans différents, séparés par des isolants.

Un bobinage selon l'état de la technique antérieur est connu du document US-A-3 719 844 par exemple ainsi que les documents JP 05 30 87 36, DE 842 366 et JP 560 100 53. Le document JP05308736 décrit un bobinage pour armature cylindrique comportant des bobines dont les têtes présentent une épaisseur réduite par rapport à l'épaisseur des faisceaux.

De manière classique, une bobine est réalisée en enroulant des conducteurs méplats préalablement isolés dans un tour à bobiner, de façon à obtenir une ou plusieurs spires concentriques.

La bobine présente généralement la forme d'une navette qui est ensuite étirée pour ouvrir la bobine et relever la tête de bobine.

L'écart entre les deux grands côtés d'une bobine destinée à être placée dans des encoches du circuit magnétique, est fonction du nombre de pôles. Dans la mesure où les deux grands côtés de la bobine sont dans des plans décalés l'un par rapport à l'autre, ces deux côtés seront également situés dans des plans différents, lorsque la bobine est placée dans le circuit magnétique. Ceci permet de réaliser le circuit électrique de la machine, en disposant les bobines les unes après les autres dans le circuit magnétique.

Les bobinages de type imbriqué présentent de nombreux avantages du point de vue électrique, du fait de l'existence de deux plans de bobinage.

Ils présentent cependant deux inconvénients principaux.

La longueur et l'encombrement des têtes de bobine sont relativement importants, ce qui est préjudiciable aux performances électriques et de plus, induit un surcoût du fait de la quantité de cuivre utilisée.

Par ailleurs, la mise en place de l'ensemble des bobines nécessite le relevage des bobines disposées en premier lieu, pour pouvoir insérer les dernières bobines. Cette opération, communément appelée relevage de pas, est une opération essentiellement manuelle, ce qui rend difficile toute automatisation.

Il est donc apparu nécessaire de proposer un autre type de bobine et un autre procédé de bobinage destinés au circuit magnétique d'une machine électrique permettant de réduire la longueur des têtes de bobine, le procédé de bobinage étant par ailleurs facilement automatisable.

L'invention concerne tout d'abord un bobinage pour circuit magnétique d'une machine électrique tournante à armatures discoïdes comprenant des bobines placées dans des encoches du circuit magnétique et disposées de façon adjacente, selon au moins deux couches de bobines successives identiques et indépendantes, de façon à remplir toutes les encoches, chaque bobine présentant une forme trapézoïdale et comprenant deux faisceaux et deux têtes de bobines dont l'épaisseur est sensiblement égale à une fraction de l'épaisseur des faisceaux et étant symétrique par rapport au plan médian des faisceaux, les faisceaux des bobines des deux couches étant placés dans un même plan d'encoche et les bobines successives et indépendantes étant disposées inversées l'une par rapport à l'autre pour permettre aux têtes de bobines des deux couches d'être emboitées l'une dans l'autre et superposées en se recouvrant partiellement.

De préférence, un premier groupe de bobines est placé uniquement dans le plan "bas d'encoche" et un deuxième groupe de bobines est placé uniquement dans le plan "haut d'encoche".

De préférence, au moins une tête de bobine est évasée par rapport aux faisceaux et présente des parties en saillie.

De préférence, la largeur maximale des parties en saillie est inférieure à l'écart entre deux encoches du circuit magnétique au niveau de la tête.

De préférence, chaque bobine présente une surface extérieure plane.

De préférence, les têtes présentent une épaisseur au plus égale à la moitie de l'épaisseur des faisceaux.

L'invention concerne également un procédé de réalisation d'un bobinage pour le circuit magnétique d'une machine électrique tournante, à courant alternatif, multiphasée, et multipôle, le procédé consistant à placer dans les encoches du circuit magnétique des bobines conformes à l'invention, les bobines étant disposées, de façon adjacente, selon au moins deux couches de bobines identiques successives et indépendantes, de façon à remplir toutes les encoches, et consistant à réaliser chaque plan d'encoche avec au moins deux couches de bobines et à emboîter les têtes des bobines l'une dans l'autre en inversant la position des bobines d'une couche de bobinage à l'autre, les têtes des bobines étant superposées en se recouvrant partiellement et les faisceaux des bobines des deux couches étant placés dans un même plan d'encoche.

Le procédé consiste de préférence à former les bobines directement dans les encoches du circuit magnétique.

De préférence, les bobines de chaque circuit électrique d'une phase déterminée sont réalisées en continu.

Lorsque le bobinage est réalisé selon deux plans d'encoche, les bobines sont placées successivement dans chaque plan d'encoche et les faisceaux d'une même bobine sont situés dans le même plan d'encoche.

Comme le procédé selon l'invention est destiné à une machine discoide, l'emboîtement des têtes de bobine est obtenu en inversant la position des bobines d'une couche de bobinage à l'autre.

Pour une machine discoide, si le bobinage est de pas 1 à 4, le procédé est mis en oeuvre avec des bobines identiques.

L'invention sera mieux comprise et d'autres buts et avantages de celle-ci apparaîtront plus clairement à la lecture de la description qui suit, faite au regard des dessins annexés sur lesquels :
La figure 1 est une vue de face d'une bobine utilisée pour un bobinage classique du type imbriqué, et placée dans une machine à armatures cylindriques.
La figure 2 représente la projection de la bobine de la figure 1, dans un plan passant par l'axe de la machine.
La figure 3 est une vue partielle en perspective du circuit magnétique d'un exemple de machine discoide, équipé de bobines selon l'invention.
La figure 4 est une vue de face de la figure 3.
La figure 5 est une vue partielle de dessus des figures 3 ou 4.
La figure 6 est une vue en coupe selon VI-VI de la figure 5.
La figure 7 est une vue partielle en coupe selon VII-VII de la figure 5.
La figure 8 est une vue partielle en coupe selon VIII-VIII de la figure 5.
La figure 9 est une vue partielle de dessus du circuit magnétique d'une machine discoïde, équipé en partie de bobines du type imbriqué et en partie de bobines selon, l'invention.
La figure 10 est une vue partielle de dessus du circuit magnétique d'un autre exemple de machine discoide, équipé de bobines selon l'invention, dans le plan "bas d'encoche".
La figure 11 est une vue partielle en coupe selon XI-XI de la figure 10.
La figure 12 est une vue partielle en coupe selon XII-XII de la figure 10.
La figure 13 est une vue partielle en coupe selon XIII-XIII de la figure 10.
La figure 14 est une vue partielle en coupe selon XIV-XIV de la figure 10.
La figure 15 comprend les figures 15a et 15b qui sont respectivement une vue de côté et une vue de face d'un exemple d'outillage permettant la réalisation de bobines selon l'invention.
La figure 16 comprend les figures 16a et 16b qui illustrent deux étapes de réalisation d'une bobine selon l'invention, avec l'outillage de la figure 15.

Les éléments communs aux différentes figures seront désignés par les mêmes références.

Les bobines utilisées dans des bobinages du type imbriqué sont généralement obtenues à partir de navettes qui sont étirées.

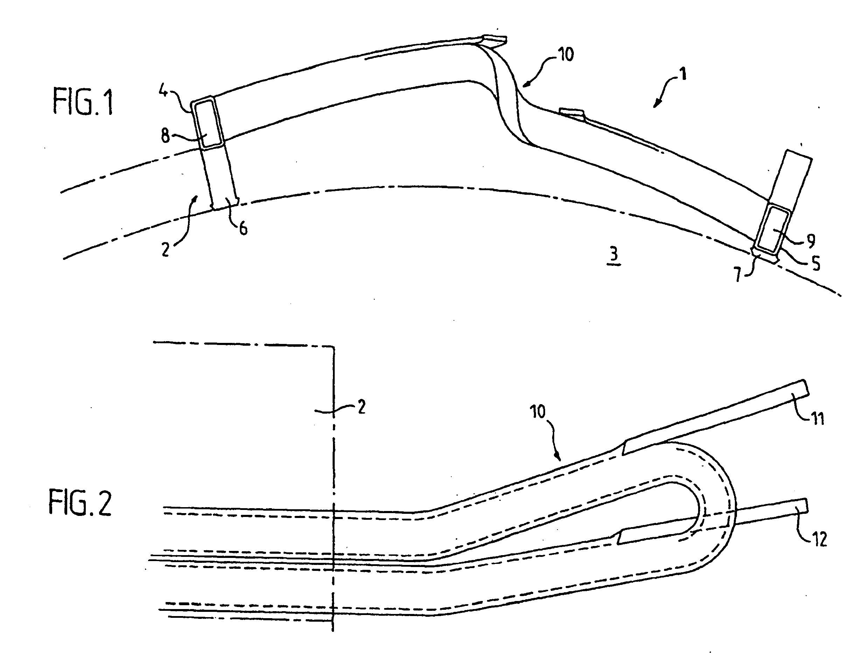

On se réfère à la figure 1 montrant une telle bobine 1, placée dans le circuit magnétique 2 du stator d'une machine tournante à armatures cylindriques.

La référence 3 désigne l'alésage du stator dans lequel est placé le rotor (non illustré sur la figure 1).

Dans le circuit magnétique 2 du stator, sont prévues des encoches qui débouchent dans l'alésage 3.

Seules deux encoches 4 et 5 sont illustrées sur la figure 1.

Les encoches sont fermées par des cales de fermeture d'encoche (non illustrées sur la figure 1) qui sont placées dans les évidements 6, 7 en queue d'aronde.

Les deux grands côtés 8 et 9 de la bobine 1 sont dans des plans décalés. Le faisceau 8 est placé dans le plan "bas d'encoche" 4 et le faisceau 9 est placé dans le plan "haut d'encoche" 5.

De manière classique, le plan "haut d'encoche" est situé le plus proche de l'entrefer, tandis que le plan "bas d'encoche" est le plan le plus éloigné de l'entrefer.

La tête de bobine porte la référence 10. Les références 11 et 12 désignent les raccordements électriques avec d'autres bobines.

La figure 2 montre qu'avec un bobinage de type imbriqué, la longueur de la tête de bobine est relativement importante.

Par ailleurs, la développante est d'autant plus longue que le nombre de pôles est faible.

Comme indiqué précédemment, la développante n'a pas d'utilité d'un point de vue électrique. Il est donc de l'intérêt du constructeur de la réduire pour diminuer la quantité de cuivre utilisée, tout en améliorant les performances électriques pour la machine.

La développante est par ailleurs très encombrante. Ceci oblige à dimensionner de façon appropriée la carcasse de la machine tournante.

L'encombrement de la développante est particulièrement préjudiciable pour les machines discoïdes. Les encoches du circuit magnétique d'une armature discoïde (stator ou rotor bobiné) sont réparties selon des rayons de l'armature. Elles débouchent sur la périphérie et sur un alésage central de l'armature, de diamètre inférieur.

Des méthodes de calcul sont connues des fabricants pour déterminer le diamètre de chaque machine discoide, ce diamètre étant le plus faible possible.

Cependant, il ne peut pas être retenu car il ne permet pas le passage de toutes les têtes de bobines au niveau de l'alésage central.

Ainsi, la longueur des têtes de bobines impose d'augmenter le diamètre de cet alésage central. Ceci oblige à accroître non seulement les dimensions de la carcasse de la machine, mais aussi les dimensions du circuit magnétique et celles des conducteurs et donc, le volume de cuivre.

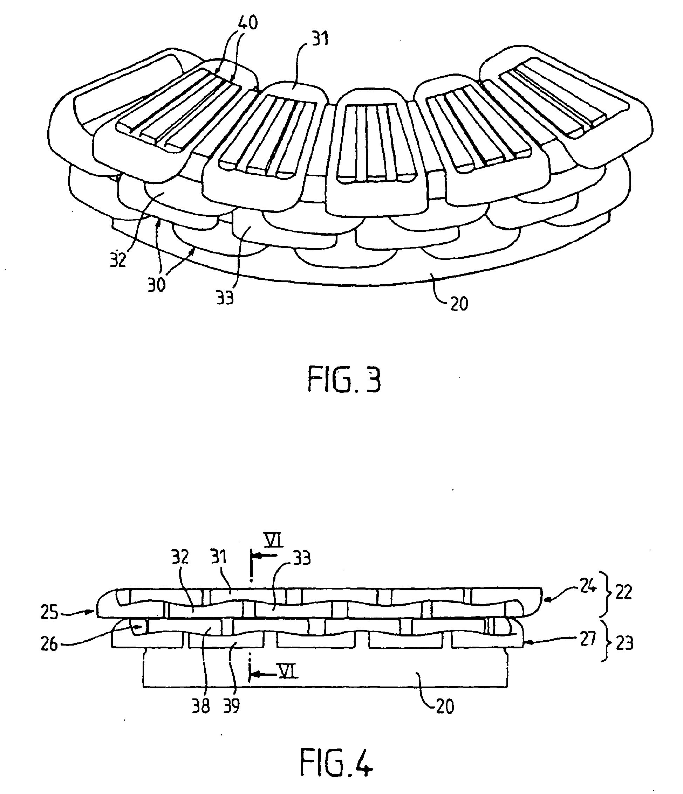

On se réfère maintenant aux figures 3 et 4 qui illustrent un bobinage d'une armature de machine discoide, de pas de 1 à 4 et à deux plans de bobinage, réalisé avec les bobines selon l'invention.

Le bobinage dans deux plans ("haut d'encoche" et "bas d'encoche") est classiquement utilisé car il permet d'obtenir un champ tournant progressif.

Cependant, la bobine selon l'invention pourrait également être utilisée pour réaliser un bobinage dans un seul plan. Elle aboutirait aux mêmes avantages qui sont de réduire l'encombrement de la développante et donc de la machine.

La référence 20 désigne le circuit magnétique de l'armature et la référence 40 les encoches du circuit magnétique. Les encoches sont réparties selon des rayons de l'armature discoide.

Le bobinage est réalisé selon deux plans 22 et 23 communément dénommés "haut d'encoche" et "bas d'encoche".

Dans chacun de ces plans, le bobinage comprend deux couches de conducteurs 24, 25 et 26, 27, de façon à remplir toutes les encoches. Les couches de conducteurs sont de forme annulaire. Elles sont planes et parallèles entre elles.

L'écart entre les deux faisceaux d'une même bobine 30 correspond à celui qui existe entre quatre encoches, le bobinage illustré étant du type pas de 1 à 4.

Les faisceaux des bobines sont généralement maintenus par des cales de fermeture d'encoche qui ne sont pas représentées sur les figures.

L'écart entre les faisceaux d'une bobine selon l'invention dépend donc du pas du bobinage retenu pour la machine.

Par ailleurs, les faisceaux d'une même bobine sont destinés à être placés dans le même plan d'encoche du circuit magnétique, contrairement aux faisceaux d'une bobine telle qu'illustrée aux figures 1 et 2. Pour une machine du type discoide, une bobine selon l'invention est donc plane et de forme générale trapézoïdale.

Comme on le verra dans la suite de la description, pour une machine présentant un nombre de pôles déterminé, ceci permet de réduire la taille des développantes.

Les figures 3 et 4 montrent déjà que le bobinage est réalisé avec des bobines 30 qui sont identiques et qui présentent donc un volume et une forme identiques.

L'identité entre les bobines n'est pas obligatoire mais elle permet de simplifier leur fabrication.

Par ailleurs, d'une couche de conducteurs ou de bobinage à l'autre, on retourne les bobines 30 pour permettre leur emboîtement. Ainsi, les bobines situées dans les couches 24 et 26 sont placées dans la même position qui est inversée par rapport à celle des bobines situées dans les couches 25 et 27.

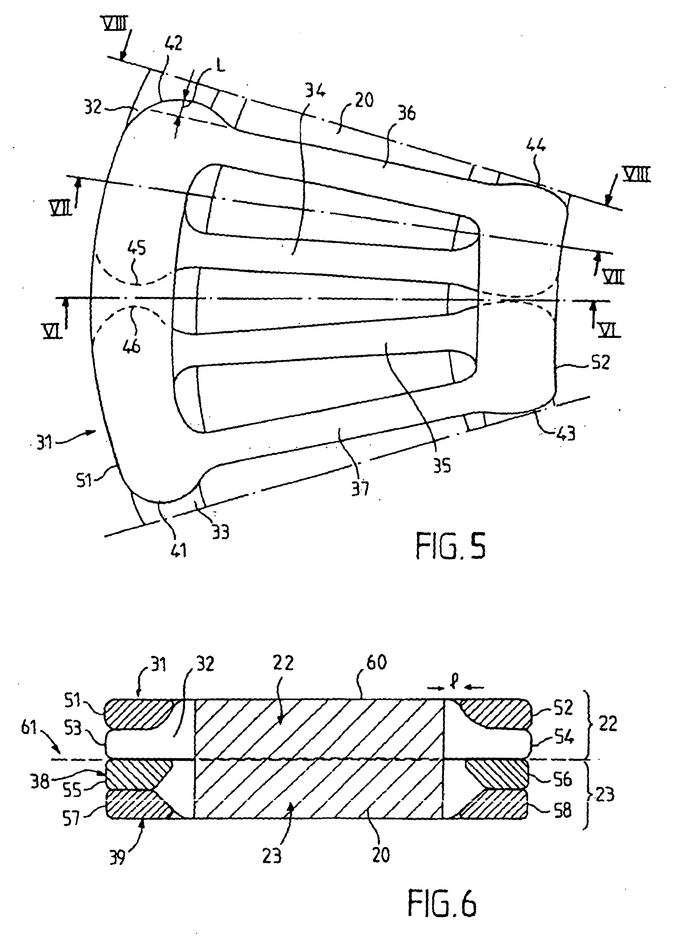

Ceci permet de réduire encore l'encombrement des têtes de bobines, ce qui va apparaître encore plus clairement sur les figures 5 à 8.

La figure 5 est une vue partielle de dessus de la machine illustrée aux figures 3 et 4, qui montre la bobine 31 dans la couche supérieure 24 du plan "haut d'encoche" 22 et les bobines 32 et 33 dans la couche inférieure 25 de ce même plan 22.

On considère que des bobines ont déjà été placées dans le circuit magnétique, dans le plan 23 "bas d'encoche", de façon adjacente dans chaque couche de bobinage.

On s'intéresse donc à la réalisation du plan 22, qui est identique à celle du plan 23.

Dans le plan 22, on réalise tout d'abord la couche inférieure 25, en plaçant les bobines 30 dans les encoches 40, de façon adjacente.

Ainsi, les bobines 32 et 33 ont deux faisceaux 34 et 35 adjacents.

Entre les deux faisceaux d'une bobine de la couche 25, deux encoches du circuit magnétique sont libres de conducteurs.

Quand la couche inférieure 25 est terminée, on réalise la couche supérieure 24 du plan 22. Pour cela, des bobines 30 sont également disposées de façon adjacente et de manière à remplir les encoches laissées libres par les bobines de la couche inférieure 25.

Ainsi, les faisceaux 36 et 37 de la bobine 31 sont placés dans les encoches non occupées par les bobines 32 et 33.

De plus, les bobines 30 sont disposées de telle sorte que les têtes des bobines situées respectivement dans la couche inférieure 25 et dans la couche supérieure 24 sont superposées.

Ainsi, par exemple, la tête 51 de la bobine 31 et les têtes des bobines 32 et 33 sont superposées en se recouvrant partiellement, comme le montre la figure 5.

On réalise ainsi un plan complet de conducteurs dans le plan "haut d'encoche" 22.

Lorsque le bobinage selon l'invention est réalisé selon deux plans, il comporte ainsi deux groupes de bobines, le premier groupe étant placé uniquement dans le plan "bas d'encoche" tandis que le deuxième groupe est disposé uniquement dans le plan "haut d'encoche". Ces deux plans sont donc indépendants l'un de l'autre et réalisés successivement.

La figure 5 montre que la bobine 31 est symétrique par rapport au plan médian des faisceaux 36, 37 matérialisé par la ligne VI-VI. Ce plan médian passe par le milieu de chacune des têtes de bobine 51 et 52 et il est perpendiculaire au plan passant par les deux faisceaux 36 et 37.

On notera que les bobines destinées à la réalisation d'un bobinage de type imbriqué, comme illustré aux figures 1 et 2 ne sont pas symétriques par rapport à un tel plan médian.

Dans l'exemple illustré à la figure 5, les têtes de bobines sont évasées selon un diamètre de la machine. Ainsi, la tète de bobine 51 de la bobine 31 comporte deux parties en saillie, référencées 41 et 42. L'évasement des têtes de bobine résulte essentiellement du procédé de fabrication qui a été retenu et ne constitue pas une caractéristique essentielle de la bobine.

De préférence, les parties en saillie ne sont cependant pas de dimensions quelconques. Il convient que leur largeur comptée à partir du faisceau correspondant soit en tout point inférieure à la moitié de l'écart entre deux encoches du circuit magnétique, au niveau de la tête 51. Ceci permet de ne pas créer de sur-épaisseurs entre deux bobines d'une même couche, par exemple les bobines 32 et 33 avec leurs parties en saillie 45 et 46. La référence L, à titre d'exemple, désigne la largeur maximale de la partie en saillie 42 de la bobine 31.

Les mêmes remarques s'appliquent aux parties en saillie 43 et 44 de la tête de bobine 52 de la bobine 31, l'écart entre les encoches étant plus faible au niveau de la tête 52 qu'à celui de la tête 51.

On se réfère maintenant à la figure 6 qui est une vue en coupe de la figure 5, selon le plan médian VI-VI. Cette figure montre les bobines dans les deux plans d'encoche 22 et 23. Ces deux plans sont classiquement séparés par un isolant qui n'est pas illustré sur la figure 6.

Pour la bobine 31, la tête 51 placée sur le diamètre extérieur de l'armature, comme la tête 52 placée sur le diamètre intérieur de l'armature, présentent une épaisseur dans un plan transversal aux faisceaux qui est sensiblement la moitié de l'épaisseur des faisceaux 36 ou 37 dans les encoches, celle-ci correspondant sensiblement à la hauteur du plan d'encoche 22.

Ainsi, la bobine 31 présente une surface extérieure 60 qui est sensiblement plane.

En pratique, l'épaisseur de la tête de bobine n'est pas réduite de moitié sur toute sa longueur. La figure 6 montre d'ailleurs que sur une longueur 1, l'épaisseur de la bobine 31 décroît de façon continue jusqu'à l'épaisseur réduite souhaitée.

Cependant, la partie de chaque tête de bobine qui ne présente pas une hauteur réduite est négligeable par rapport à la longueur totale de la développante.

La section de la bobine 31 étant identique au niveau des faisceaux 36, 37 et des têtes de bobine 51, 52, les conducteurs de la bobine sont donc étalés et répartis dans les têtes, de façon à réduire l'épaisseur de la bobine. C'est pourquoi, la bobine peut présenter des protubérances comme celles référencées 41 et 42 ou 45 et 46. Ces protubérances permettent également de réduire la longueur des têtes de bobines.

Comme cela a été déjà décrit en référence aux figures 3 et 4, les bobines sont inversées d'une couche du bobinage à l'autre.

Ainsi, les bobines 32 et 33 sont inversées par rapport à la bobine 31. Comme le montre la figure 6, cette inversion permet d'emboîter les têtes 53, respectivement 54 de la bobine 32 dans les têtes 51, respectivement 52 de la bobine 31.

Comme indiqué précédemment, le recouvrement des têtes de bobine situées dans des couches différentes d'un même plan d'encoche est partiel.

Les deux bobines 31 et 32 présentant, au niveau de leurs têtes, une épaisseur réduite sensiblement de moitié par rapport à celle de leurs faisceaux, l'épaisseur des têtes des deux bobines correspond également sensiblement à celle du plan d'encoche correspondant 22.

La figure 6 illustre également les bobines 38 et 39 placées dans le plan d'encoche 23 (bas d'encoche). Elles présentent la même forme que la bobine 31 et sont également en position inversée l'une par rapport à l'autre, ce qui permet l'emboîtement de leurs têtes de bobine d'une part, 55 et 57 et d'autre part, 56 et 58.

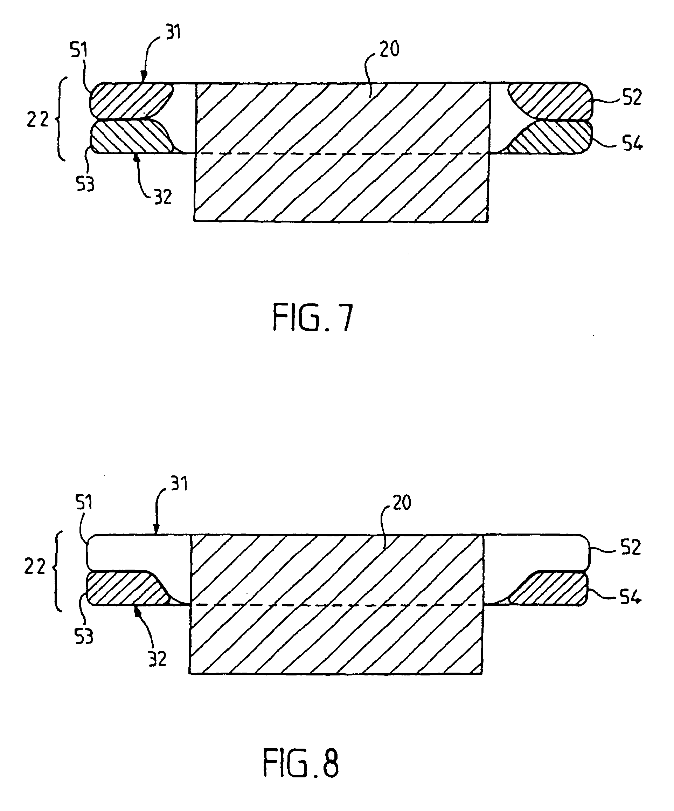

On se réfère maintenant à la figure 7 qui est une vue partielle en coupe de la figure 5, selon VII-VII. La figure 7 montre seulement les bobines présentes dans le plan 22 (haut d'encoche). Cependant, les bobines de chaque plan 22 et 23 sont symétriques par rapport au plan 61 qui est le plan médian entre les deux plans d'encoche 22 et 23, avec un décalage lié aux caractéristiques de la machine.

La figure 7 confirme que les têtes de bobine 51, respectivement 52 de la bobine 31 sont bien emboîtées dans les têtes de bobine 53, respectivement 54 de la bobine 32.

Il en est de même pour la figure 8 qui est une vue partielle en coupe de la figure 5, selon VIII-VIII, sur laquelle seules les bobines présentes dans le plan 22 sont représentées.

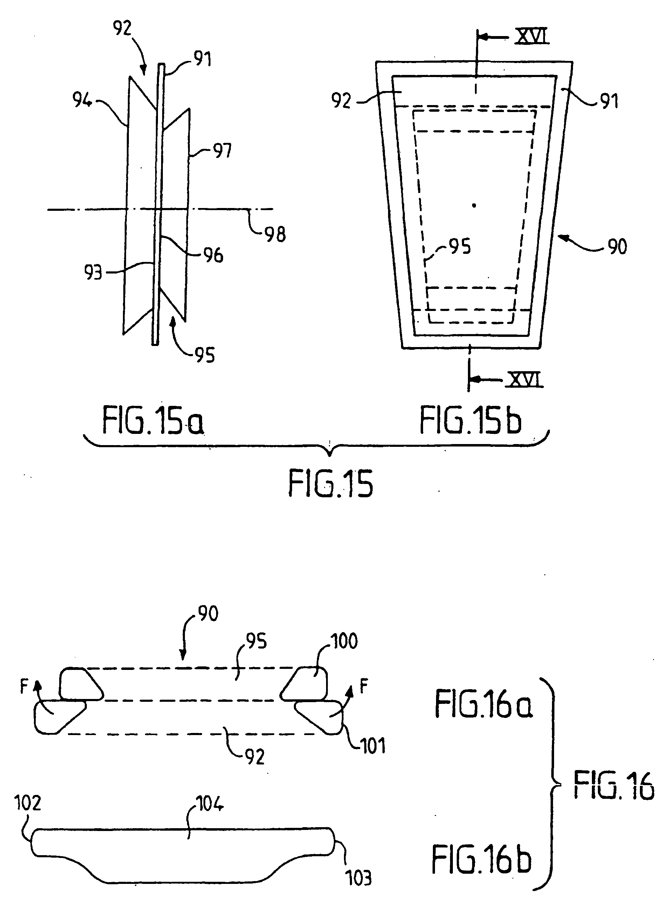

Grâce à la forme particulière donnée aux têtes de bobine, les bobines peuvent se croiser sans créer de sur-épaisseur. Comme cela sera expliqué en référence aux figures 15 et 16, les bobines selon l'invention comprennent, à cet effet, des spires de longueurs différentes.

Ainsi, la longueur des développantes est réduite grâce à l'utilisation de bobines dont les faisceaux sont placés dans un même plan d'encoche et dont les têtes peuvent s'emboîter. La forme générale des développantes est très compacte, tant sur le diamètre extérieur que sur le diamètre intérieur de l'armature.

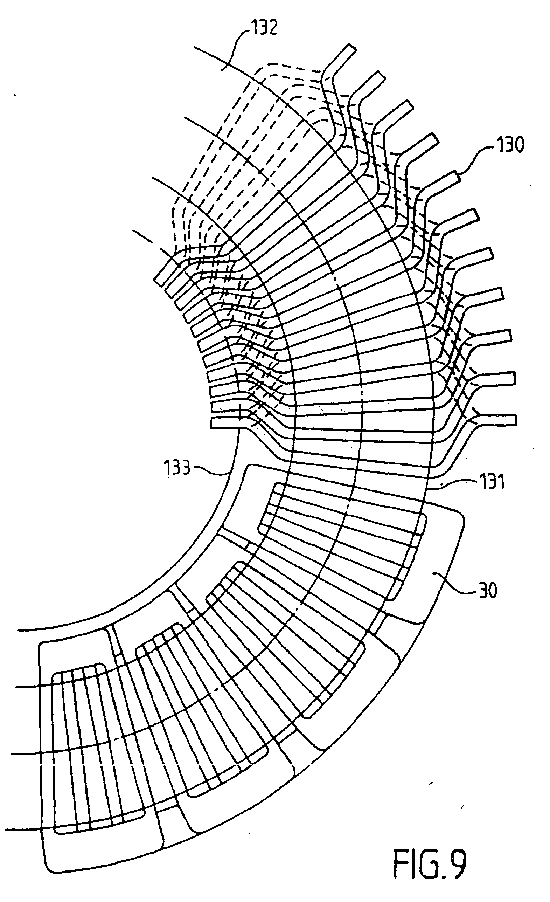

Ceci apparaît clairement sur la figure 9 qui est une vue partielle en plan du circuit magnétique d'une machine discoide, équipé d'un bobinage du type pas de 1 à 4.

Ce circuit magnétique comporte, à titre de comparaison, des bobines 30 telles qu'illustrées sur les figures 3 à 8 et des bobines 130 du type imbriqué.

On constate que l'encombrement du bobinage réalisé avec les bobines 30 est réduit par rapport à celui du bobinage imbriqué réalisé avec les bobines 130, au niveau des développantes, tant sur le diamètre extérieur 131 du circuit magnétique 132 que sur le pourtour de l'alésage central 133. Cet alésage est destiné à recevoir l'arbre de la machine.

En pratique, lorsque le bobinage est réalisé avec des bobines 30 conformes à l'invention, le diamètre de l'alésage central du circuit magnétique comme le diamètre extérieur du circuit magnétique peuvent être réduits.

Dans l'exemple illustré sur les figures 3 à 8, chaque plan de bobinage ("haut d'encoche" et "bas d'encoche") est réalisé avec deux couches de bobines, les deux plans étant indépendants.

Des machines de caractéristiques différentes peuvent imposer de réaliser, dans un bobinage en deux plans, chaque plan de bobinage avec trois couches de bobines. Cet exemple de réalisation n'est pas illustré sur les figures.

Dans un tel cas et pour une machine discoïde, le bobinage peut être réalisé avec deux types différents de bobine, présentant un volume sensiblement identique.

Le premier type de bobine est similaire à celui de la bobine 31 illustrée notamment sur les figures 5 à 8, l'épaisseur des têtes de la bobine correspondant sensiblement à un tiers de l'épaisseur des faisceaux de la bobine, elle-même sensiblement égale à la hauteur du plan d'encoche (soit environ la moitié de la hauteur totale de l'encoche).

Comme pour la bobine 31, une bobine de ce premier type présente une surface extérieure sensiblement plane.

Le deuxième type de bobine présente des têtes de bobines dont l'épaisseur est sensiblement identique à celle des bobines du premier type, c'est-à-dire environ un tiers de l'épaisseur des faisceaux, mais qui sont placées dans la partie centrale de la section transversale des faisceaux.

Une bobine de ce deuxième type ne comporte donc pas de surface extérieure plane.

Pour réaliser un plan de bobinage en trois couches, on place dans la première couche, des bobines du premier type ; dans la deuxième couche, des bobines du deuxième type et dans la troisième couche, des bobines du premier type, dans la position inverse de celle retenue pour la première couche.

Comme précédemment, les têtes de bobine de couches différentes d'un même plan de bobinage sont emboitées et superposées, en se recouvrant partiellement.

On peut ainsi obtenir encore des développantes de longueur réduite et de forme compacte.

Ainsi, de manière générale, l'épaisseur des têtes de bobine est sensiblement égale à une fraction de l'épaisseur des faisceaux, cette fraction dépendant du nombre de couches nécessaire pour former le bobinage dans un plan d'encoche.

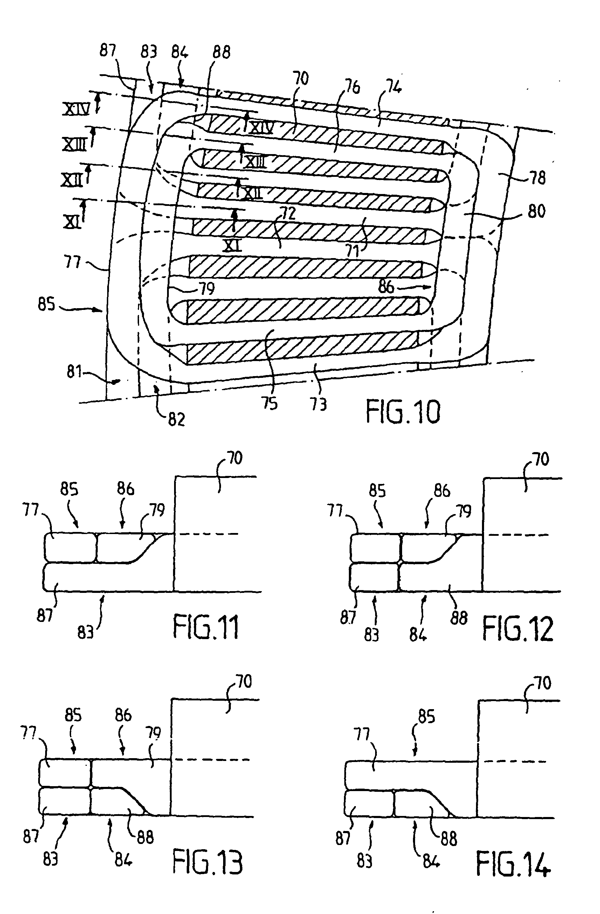

La figure 10 est une vue partielle en plan d'une armature de machine discoide dont les caractéristiques sont différentes de la machine illustrée sur les figures 3 à 8.

En particulier, le pas du bobinage est de 1 à 8 et de 2 à 7. Ceci oblige à réaliser le bobinage avec des bobines concentriques.

La figure 10 illustre seulement les bobines situées dans le plan "bas d'encoche".

De manière générale, lorsque le pas du bobinage est plus grand que 1 à 4, le bobinage intègre des bobines concentriques pour obtenir le pas de bobinage souhaité. Par exemple, pour une machine multiphasée dont le nombre d'encoches par pôle et par phase est proche de 2, le bobinage sera réalisé à partir de deux bobines concentriques.

La référence 70 désigne le circuit magnétique de la machine discoïde qui présente des encoches radiales.

Les bobines 81, 82, 83 et 84 sont situées dans la première couche du plan "bas d'encoche", tandis que les bobines 85 et 86 sont dans la deuxième couche de ce même plan.

Les bobines 81, 83 et 85 sont identiques, présentent donc un volume et une forme identiques et correspondent à un premier type de bobine pour lequel l'écart entre les deux faisceaux est de 7 encoches.

Les bobines 82, 84, et 86 sont identiques, présentent donc un volume et une forme identiques et correspondent à un deuxième type de bobine pour lequel l'écart entre les deux faisceaux est de 5 encoches.

Comme pour les bobines 30 illustrées sur les figures 3 à 8, les développantes de toutes ces bobines présentent une épaisseur réduite et sensiblement égale à la moitié de l'épaisseur des faisceaux.

Ainsi, on réalise la première couche de bobinage du plan "bas d'encoche" en plaçant dans les encoches, de façon adjacente, des bobines du premier type, comme les bobines 81 et 83 dont les faisceaux 71 et 72 sont situés dans des encoches adjacentes, puis en disposant, à l'intérieur de ces bobines, des bobines du deuxième type, comme les bobines 82 et 84.

L'ordre dans lequel les bobines du premier et du deuxième type sont placées dans les encoches est en pratique indifférent.

On forme ensuite la deuxième couche de bobinage du plan "bas d'encoche", en plaçant de manière similaire mais dans les encoches laissées libres, des bobines du premier et du deuxième type, comme les bobines 85 et 86. Ainsi, les faisceaux 73 et 75 des bobines 85 et 86 sont placés dans des encoches adjacentes, comme les faisceaux 74 et 76 de ces mêmes bobines. Comme pour le bobinage illustré aux figures 3 à 8, les bobines sont inversées entre la première et la deuxième couche de bobinage. Par ailleurs, l'épaisseur des têtes de bobine 77 et 78 de la bobine 85 et des têtes de bobine 79 et 80 de la bobine 86 est sensiblement égale à la moitié de l'épaisseur des faisceaux. Il en est de même pour les autres bobines.

Comme cela a été indiqué précédemment au regard de la figure 5, les têtes de bobines, situées dans des couches différentes d'un même plan d'encoche, sont emboîtées l'une dans l'autre et superposées en se recouvrant partiellement.

Ainsi, la tête 77 de la bobine 85 recouvre partiellement les têtes des bobines 81, 82, 83 et 84 situées dans la première couche de bobinage du plan "bas d'encoche".

On peut réaliser ensuite le bobinage dans le plan "haut d'encoche".

On peut se référer aux figures 11 à 14 qui montrent des coupes partielles en coupe selon XI-XI à XIV-XIV de la figure 10, dans lesquelles seules les bobines présentes dans le plan "bas d'encoche" sont illustrées.

Ces quatre figures confirment qu'en tout point du plan "bas d'encoche", les têtes des bobines sont superposées et emboîtées les unes dans les autres.

On désigne par la référence 87, respectivement 88, la tête de bobine de la bobine 83, respectivement 84, située sur le diamètre extérieur du circuit magnétique.

Les bobines selon l'invention permettent là encore de réduire la longueur des têtes de bobine puisque les faisceaux d'une même bobine appartiennent à un même plan d'encoche. Par ailleurs, l'épaisseur réduite des têtes de bobine permet, dans un même plan d'encoche, de les emboîter, ce qui permet de réduire encore la longueur des têtes de bobine pour leur donner une forme compacte.

La description précédente montre que le procédé de bobinage selon l'invention, réalisé avec des bobines conformes à l'invention peut être facilement automatisé. Il ne nécessite pas d'opération de relevage de pas, comme les bobinages du type imbriqué.

En effet, que le bobinage soit réalisé en un plan ou en deux plans d'encoche, chaque plan de conducteurs est obtenu en disposant les bobines dans les encoches selon des couches successives et indépendantes, chaque couche étant située dans un même plan du circuit magnétique.

Par ailleurs, lorsque le bobinage est réalisé selon deux plans d'encoche, chacun de ces deux plans est formé de façon indépendante et successive, en disposant les bobines de façon appropriée.

On peut réaliser les bobines préalablement, puis les placer dans les encoches, mais on peut également les former directement dans les encoches.

Dans ce cas, les spires d'une bobine sont directement formées à partir des tourets de fils de cuivre dans les encoches du circuit magnétique et les têtes de la bobine en cours de réalisation sont calibrées directement à la forme voulue au moyen d'un outillage amovible.

Les bobines sont avantageusement réalisées en continu, c'est-à-dire sans rupture de fil.

Par ailleurs, pour une machine multiphasée, les circuits électriques de chaque phase peuvent être réalisés directement, en formant successivement et en continu les bobines de chacun des circuits. Ceci évite tout raccordement électrique postérieur à la réalisation des bobines.

On se réfère maintenant aux figures 15 et 16, pour décrire un exemple de procédé de réalisation de bobines selon l'invention.

La figure 15 montre que l'outillage 90 comprend un support plan 91 de forme trapézoidale.

Sur une face du support 91, est fixée une première pièce 92 également de forme trapézoidale et dont la section croit de façon continue depuis sa surface interne 93, fixée sur le support, jusqu'à sa surface externe 94.

Sur l'autre face du support 91, est fixée une deuxième pièce 95 de forme générale trapézoidale et dont la section croit également de façon continue depuis sa surface interne 96, fixée sur le support, jusqu'à sa surface externe 97. La section de la surface interne 96, respectivement la section de la surface externe 97, est inférieure à la section de la surface interne 93 de la première pièce 92, respectivement à la section de la surface externe 94 de cette même pièce 92.

Les dimensions de l'outillage 90 dépend bien sûr des dimensions de la bobine à réaliser.

Ainsi, la hauteur de la pièce 92 et la hauteur de la pièce 95 (selon l'axe 98) correspondent sensiblement à la hauteur du faisceau 104 de la bobine illustrée à la figure 16.

La longueur de l'outillage 90 (selon la coupe XVI-XVI) correspond sensiblement à la longueur moyenne de la bobine.

Enfin, la largeur de la pièce 95 (selon une ligne perpendiculaire au plan de coupe XVI-XVI) correspond sensiblement à la largeur du pas tandis que la largeur de la pièce 92 correspond à environ la largeur du pas augmentée de 10 %, afin de réduire la longueur des têtes de bobine.

Comme indiqué précédemment, d'autres procédés de fabrication appropriés peuvent être retenus.

Une bobine selon l'invention est obtenue, de la façon suivante.

L'outillage 90 décrit à la figure 15 est monté sur un tour à bobiner, dont l'axe porte la référence 98. Des conducteurs sont alors enroulés sur l'outillage, les spires ayant des longueurs différentes du fait de la forme donnée aux première et deuxième pièces 92 et 95.

Comme le montre la figure 16a qui est une vue en coupe selon XVI-XVI de l'outillage 90 après enroulement des conducteurs, on obtient deux enroulements 100 et 101 de conducteurs, dont la forme dépend de celle des première et deuxième pièces 92 et 95.

L'opération suivante consiste à faire remonter l'enroulement 101 au niveau de l'enroulement 100, selon les flèches F mentionnées sur la figure 16a.

On obtient alors la bobine illustrée à la figure 16b, qui est une vue de côté selon un des faisceaux de la bobine. Les deux têtes de bobine 102 et 103 présentent une épaisseur qui est sensiblement égale à la moitié de l'épaisseur du faisceau 104.

L'outillage illustré à la figure 15 convient à la réalisation de bobines selon l'invention, destinées au circuit magnétique de machines discoides dont un plan de bobinage est réalisé en deux couches successives de bobines. Il est composé de pièces de forme générale trapézoïdale, de façon à permettre la réalisation de bobines qui seront également de forme trapézoidale pour pouvoir être placées dans des encoches radiales du circuit magnétique.

L'outillage devrait donc être modifié pour la réalisation de bobines destinées au circuit magnétique de machines cylindriques. Cependant, le procédé de mise en oeuvre est inchangé.

Toute la description qui précède a été faite pour des bobines destinées à des machines discoïdes, mais les bobines selon l'invention peuvent également être utilisées pour des machines à armatures cylindriques.

Les bobines pour machines cylindriques diffèrent légèrement de celles décrites précédemment.

En effet, les encoches du circuit magnétique de telles machines sont toutes parallèles à l'axe de la machine et, dans un même plan d'encoche, l'écartement entre deux encoches est constant d'une extrémité du circuit magnétique à l'autre. L'écart entre les faisceaux d'une bobine est donc également constant. Ce n'est pas le cas pour une bobine destinée à une machine discoïde, comme les bobines 30 illustrées sur la figure 3.

Par ailleurs, pour une bobine destinée à une machine à armatures cylindriques, l'écart entre les deux faisceaux de la bobine sera différent, suivant que la bobine doit être placée dans le plan "bas d'encoche" ou dans le plan "haut d'encoche". Ceci ressort notamment de la figure 1.

De plus, les bobines selon l'invention destinées à une machine cylindrique ne sont pas planes mais forment une portion de cylindre dont la courbure dépend du diamètre de la machine. C'est pourquoi, le bobinage dans un même plan d'encoche nécessite autant de types de bobine que le plan comprend de couches de bobines, puisque les bobines ne peuvent pas être inversées pour s'imbriquer les unes dans les autres.

Le bobinage du circuit magnétique d'une machine à armatures cylindriques ne peut donc pas être réalisé à l'aide de bobines identiques.

Cependant, comme pour les bobines destinées à des machines discoides, les bobines pour machines à armatures cylindriques sont symétriques par rapport au plan médian des faisceaux de la bobine.

Les deux développantes d'une même bobine sont également identiques.

Ainsi, la projection dans un plan passant par les deux faisceaux d'une bobine selon l'invention destinée à une machine cylindrique, présente une forme générale rectangulaire.

Les bobines et le procédé de bobinage selon l'invention sont avantageux à la fois pour les machines à armatures discoïdes et les machines à armatures cylindriques.

Les bobines permettent, en effet, de réduire la longueur des développantes, tandis que le procédé de bobinage peut être facilement automatisé, les bobines étant placées dans les encoches du circuit magnétique selon des couches successives et indépendantes.

Ces couches sont de forme cylindrique et concentrique avec les "plans d'encoche", pour une machine cylindrique et elles présentent une forme annulaire et parallèle aux "plans d'encoche", pour une machine discoide.

La réduction de la longueur des développantes entraine une diminution de la quantité de cuivre utilisée, par rapport à une machine dont le bobinage est du type imbriqué, les caractéristiques de la machine étant par ailleurs identiques.

Elle entraîne donc une réduction des pertes "cuivre", lesquelles représentent généralement 50 % des pertes totales de la machine. Pour les machines lentes, les pertes "cuivre" sont largement prépondérantes.

A titre d'exemple, sur une machine basse vitesse de couple nominal 3 000 Nm, un bobinage réalisé avec des bobines conformes à l'invention permet d'obtenir un gain de l'ordre de 20 % sur le volume de cuivre stator et donc sensiblement le même gain pour les pertes joules stator. Dans ce cas, le rendement de la machine passe de 87,4 à 89,5 %. Il est donc amélioré de 2,1 %.

La réduction de la longueur des développantes entraîne également une diminution de l'encombrement du circuit magnétique et donc des dimensions de la carcasse de la machine.

Pour une machine discoïde, la réduction de la longueur des développantes permet également de retenir le dimensionnement minimal d'une armature de la machine, sans devoir augmenter le diamètre de l'alésage central de l'armature pour le passage des développantes.

Ainsi, par rapport aux bobines utilisées pour un bobinage du type imbriqué, les bobines selon l'invention permettent de réduire le diamètre des armatures et donc les dimensions du circuit magnétique.

Les signes de référence insérés après les caractéristiques techniques mentionnées dans les revendications ont pour seul but de faciliter la compréhension de ces dernières et ne sauraient en limiter la portée.

## Revendications

1. Bobinage pour circuit magnétique d'une machine électrique tournante à armatures discoïdes comprenant des bobines (30) placées dans des encoches (40) du circuit magnétique (20, 70) et disposées de façon adjacente, selon au moins deux couches de bobines successives identiques et indépendantes, de façon à remplir toutes les encoches, chaque bobine présentant une forme trapézoïdale et comprenant deux faisceaux (36, 37 ; 73, 74 ; 75, 76) et deux têtes de bobines (51, 52 ; 77, 78 ; 79, 80) dont l'épaisseur est sensiblement égale à une fraction de l'épaisseur des faisceaux et étant symétrique par rapport au plan médian des faisceaux, les faisceaux des bobines des deux couches étant placés dans un même plan d'encoche et les bobines successives et indépendantes étant disposées inversées l'une par rapport à l'autre pour permettre aux têtes de bobines des deux couches d'être emboitées l'une dans l'autre et superposées en se recouvrant partiellement.

2. Bobinage selon la revendication 1, selon lequel un premier groupe de bobines (38, 39; 83, 84, 85, 86) est placé uniquement dans le plan "bas d'encoche" (23) et un deuxième groupe de bobines (31, 32) est placé uniquement dans le plan "haut d'encoche" (22).

3. Bobinage selon la revendication 1 ou 2, selon lequel au moins une tête de bobine (51, 52) est évasée par rapport aux faisceaux (36, 37) et présente des parties en saillie (41, 42; 43, 44).

4. Bobinage selon la revendication 3, selon lequel la largeur maximale des parties en saillie (41, 42 ; 43, 44) est inférieure à l'écart entre deux encoches (40) du circuit magnétique (20) au niveau de la tête (51, 52).

5. Bobinage selon l'une des revendications 1 à 4, selon lequel chaque bobine présente une surface extérieure (60) plane.

6. Bobinage selon l'une des revendications précédentes, selon lequel les têtes présentent une épaisseur au plus égale à la moitie de l'épaisseur des faisceaux.

7. Procédé de réalisation d'un bobinage pour le circuit magnétique d'une machine électrique tournante, à courant alternatif, multiphasée, et multipôle, le procédé consistant à placer dans les encoches (40) du circuit magnétique (20, 70) des bobines conformes à l'une des revendications 1 à 6, les bobines étant disposées, de façon adjacente, selon au moins deux couches de bobines identiques successives et indépendantes, de façon à remplir toutes les encoches, et consistant à réaliser chaque plan d'encoche avec au moins deux couches de bobines et à emboîter les têtes des bobines l'une dans l'autre en inversant la position des bobines (30) d'une couche de bobinage à l'autre, les têtes des bobines étant superposées en se recouvrant partiellement et les faisceaux des bobines des deux couches étant placés dans un même plan d'encoche.

8. Procédé de réalisation d'un bobinage conforme à la revendication 7, consistant à former les bobines directement dans les encoches (40) du circuit magnétique (20, 70).

9. Procédé de réalisation d'un bobinage conforme à la revendication 8, selon lequel les bobines de chaque circuit électrique d'une phase déterminée sont réalisées en continu.

10. Procédé de réalisation d'un bobinage conforme à l'une des revendications 7 à 9 et selon deux plans d'encoche (22, 23), les bobines étant placées successivement dans chaque plan d'encoche et les faisceaux d'une même bobine étant situes dans le même plan d'encoche (22, 23).

11. Procédé de réalisation d'un bobinage conforme à l'une des revendications 7 à 10, et au pas de 1 à 4 pour une machine discoïde, mis en oeuvre avec des bobines (30) identiques.

## Claims

1. A winding for a magnetic circuit of a rotating electrical machine with discoid frames comprising windings (30) placed in slots (40) of the magnetic circuit (20, 70) and arranged adjacent to each other, with at least two layers of successive, identical and independent windings, such that all the slots are filled, each winding presenting a trapezoid form and comprising two bundles (36, 37 ; 73, 74 ; 75, 76) and two winding ends (51, 52 ; 77, 78 ; 79, 80), the thickness of which is substantially equal to a fraction of the thickness of the bundles and being symmetrical with relation to the median plane of the bundles, the bundles of the windings of the two layers being placed in a same slot plane and the successive and independent windings being arranged inverted to each other to allow the winding ends of the two layers to be fitted inside each other, being superimposed and partially covering each other.

2. The winding according to claim 1, according to which a first group of windings (38, 39; 83, 84, 85, 86) is placed only in a "slot bottom" plane (23) and a second group of windings (31, 32) is placed only in a "slot top" plane (22).

3. The winding according to claim 1 or 2, according to which at least one winding end (51, 52) is flared with relation to the bundles (36, 37) and presents projecting parts (41, 42 ; 43, 44).

4. The winding according to claim 3, according to which the maximum width of the projecting parts (41, 42 ; 43, 44) is less than the distance between two slots (40) of the magnetic circuit (20) at the level of the end (51, 52).

5. The winding according to one of claims 1 to 4, according to which each winding presents a flat outer surface (60).

6. The winding according to one of the previous claims, according to which the ends present a thickness at least equal to half of the thickness of the bundles.

7. A process of producing a winding for the magnetic circuit of a rotating electrical machine, running on multiphase, multipolar, alternating current, the process consisting of placing in the slots (40) of the magnetic circuit (20, 70) windings in conformance with one of claims 1 to 6, the windings being arranged adjacent to each other, with at least two layers of identical, successive and independent windings, so as to fill all the slots, and consisting of each slot level with at least two layers of windings to fit the winding ends one into another by inverting the position of the windings (30) from one winding layer to another, the winding ends being superimposed and partially covering each other and the bundles of the windings of the two layers being placed in a same slot plane.

8. The process of producing a winding in conformance with claim 7, consisting of forming windings directly in the slots (40) of the magnetic circuit (20, 70).

9. The process of producing a winding in conformance with claim 8, according to which the windings of each electrical circuit of a given phase are formed continuously.

10. The process of producing a winding in conformance with one of claims 7 to 9 and according to two slot planes (22, 23), the windings being placed successively in each slot plane and the bundles from a same winding being situated in the same slot plane (22, 23).

11. The process of producing a winding in conformance with one of claims 7 to 10, and with a pitch of 1 to 4, for a discoid machine, implemented with identical windings (30).

## Patentansprüche

1. Wicklung für Magnetkreis einer drehenden Elektromaschine mit scheibenförmigen Ankern, die Wicklungen (30) aufweist, die in Kerben (40) des Magnetkreises (20, 70) platziert und nebeneinander in mindestens zwei Schichten aufeinander folgender identischer und unabhängiger Wicklungen derart angeordnet sind, dass alle Kerben gefüllt werden, wobei jede Wicklung eine Trapezform und zwei Bündel (36, 37; 73, 74; 75, 76) und zwei Wicklungsköpfe (51, 52; 77, 78; 79, 80) aufweist, deren Stärke im Wesentlichen gleich einem Bruchteil der Stärke der Bündel ist und in Bezug zu der Mittenebene der Bündel symmetrisch ist, wobei die Bündel der Wicklungen der zwei Schichten in einer gleichen Kerbenebene platziert sind und die aufeinander folgenden und unabhängigen Wicklungen zueinander umgekehrt angeordnet sind, um es den Wicklungsköpfen der zwei Schichten zu erlauben, unter teilweiser Überlagerung ineinander verschachtelt und übereinander gelagert zu werden.

2. Wicklung nach Anspruch 1, bei der eine erste Gruppe von Wicklungen (38, 39; 83, 84, 85, 86) nur in der Ebene "Kerbenunterseite" (23) platziert ist, und eine zweite Gruppe von Wicklungen (31, 32) nur in der Ebene "Kerbenoberseite" (22) platziert ist.

3. Wicklung nach Anspruch 1 oder 2, bei der mindestens ein Wicklungskopf (51, 52) in Bezug zu den Bündeln (30, 37) aufgeweitet ist und vorspringende Teile (41, 42; 43, 44) aufweist.

4. Wicklung nach Anspruch 3, bei der die maximale Breite der vorstehenden Teile (41, 42; 43, 44) kleiner ist als der Abstand zwischen zwei Kerben (40) des Magnetkreises (20) auf dem Niveau des Kopfes (51, 52).

5. Wicklung nach einem der Ansprüche 1 bis 4, bei der jede Wicklung eine ebene Außenfläche (60) aufweist.

6. Wicklung nach einem der vorhergehenden Ansprüche, bei der die Köpfe eine Stärke aufweisen, die maximal gleich der Hälfte der Stärke der Bündel ist.

7. Verfahren zum Herstellen einer Wicklung für den Magnetkreis einer drehenden Elektromaschine, mit Wechselstrom, mehrphasig, mehrpolig, wobei das Verfahren darin besteht, in die Kerben (40) des Magnetkreises (20, 70) Wicklungen nach einem der Ansprüche 1 bis 6 zu platzieren, wobei die Wicklungen nebeneinander gemäß mindestens zwei Schichten identischer aufeinander folgender und unabhängiger Wicklungen derart angeordnet werden, dass sie alle Kerben füllen, und darin bestehend, jede Kerbenebene mit mindestens zwei Schichten von Wicklungen herzustellen und die Wicklungsköpfe ineinander unter Umkehren der Position der Wicklungen (30) von einer Wicklungsschicht zur anderen zu verschachteln, wobei die Wicklungsköpfe überlagert werden und sich teilweise gegenseitig abdecken und die Bündel der Wicklungen der zwei Schichten in einer gleichen Kerbenebene platziert sind.

8. Verfahren zum Herstellen einer Wicklung nach Anspruch 7, das darin besteht, die Wicklungen direkt in den Kerben (40) des Magnetkreises (20, 70) auszubilden.

9. Verfahren zum Herstellen einer Wicklung nach Anspruch 8, bei der die Wicklungen jedes Stromkreises einer bestimmten Phase ununterbrochen ausgeführt werden.

10. Verfahren zum Herstellen einer Wicklung nach einem der Ansprüche 7 bis 9 und in zwei Kerbenebenen (22, 23), wobei die Wicklungen aufeinander folgend in jeder Kerbenebene platziert werden und sich die Bündel einer gleichen Wicklung in der gleichen Kerbenebene (22, 23) befinden.

11. Verfahren zum Herstellen einer Wicklung nach einem der Ansprüche 7 bis 10 und im Schritt von 1 bis 4 für eine diskusförmige Maschine, umgesetzt mit identischen Wicklungen (30).
